(19) Europäisches Patentamt
European Patent Office
Office européen des brevets

(11) EP 3 904 418 A1

(12) EUROPEAN PATENT APPLICATION
published in accordance with Art. 153(4) EPC

(43) Date of publication:
**03.11.2021 Bulletin 2021/44**

(21) Application number: **19903697.1**

(22) Date of filing: **17.12.2019**

(51) Int Cl.:
***C08G 61/08*** *(2006.01)*

(86) International application number:
**PCT/JP2019/049439**

(87) International publication number:
**WO 2020/137710 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018245453**

(71) Applicant: **Mitsui Chemicals, Inc.**
**Minato-ku**
**Tokyo 105-7122 (JP)**

(72) Inventors:
- **HE, Jiacheng**
  **Sodegaura-shi, Chiba 299-0265 (JP)**
- **WASA, Hideki**
  **Sodegaura-shi, Chiba 299-0265 (JP)**
- **FUJIMURA, Futoshi**
  **Sodegaura-shi, Chiba 299-0265 (JP)**
- **SAITO, Haruka**
  **Sodegaura-shi, Chiba 299-0265 (JP)**
- **MOORTHI, Sunil Krzysztof**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

# (54) CYCLO-OLEFIN COPOLYMER FOR MEDICAL DEVICES, CYCLO-OLEFIN COPOLYMER COMPOSITION FOR MEDICAL DEVICES, AND MOLDED BODY

(57) A cyclic olefin copolymer for a medical instrument has an aromatic ring and contains at least one structural unit (A) of the specific formulas (Ia), (II), and (III).

EP 3 904 418 A1

## Description

### TECHNICAL FIELD

The present invention relates to a cyclic olefin copolymer for a medical instrument, a cyclic olefin copolymer composition for a medical instrument, and a molded body.

### BACKGROUND ART

In recent years, in optical materials such as camera lenses for mobile phones and automobiles, the development of resins having excellent optical properties as a substitute for glass has been progressing. In addition, cyclic olefin hydrogenated ring-opening polymers and cyclic olefin addition copolymers, which have lower water absorption and less dimensional change than resins such as polycarbonate (PC) and polymethylmethacrylate (PMMA), have attracted attention among glass substitutes.

For example, regarding the cyclic olefin hydrogenated ring-opening polymer, Patent Document 1 and Patent Document 2 describe resins excellent in high refraction, yellowing resistance and moldability obtained by ring-opening metathesis polymerization of monomers derived from tetracyclododecene and norbornene compounds. Further, Patent Document 3 describes that a resin having good breaking strength can be obtained by ring-opening metathesis polymerization of a 3-membered cyclopentene monomer. Further, Patent Document 4 describes that in a biochemical instrument with which a biochemical substance sample comes into contact, a portion with which the biochemical substance sample comes into contact is made of a resin composition containing at least one cyclic olefin-based polymer selected from the group consisting of a copolymer of a cyclic olefin and a chain olefin, a ring-opening polymer of a cyclic olefin, and a hydrogenated product of a ring-opening polymer of a cyclic olefin, and an antioxidant, whereby adsorption of a biochemical substance can be favorably suppressed.

### RELATED DOCUMENT

### PATENT DOCUMENT

[Patent Document 1] Japanese Unexamined Patent Publication No. 2007-137935
[Patent Document 2] International Publication No. WO2016/052302
[Patent Document 3] International Publication No. WO2017/051819
[Patent Document 4] International Publication No. WO2019/065149

### SUMMARY OF THE INVENTION

### TECHNICAL PROBLEM

On the other hand, glass substitute resins are expected to be applied to various medical applications such as prefilled syringes in addition to lenses. Medical instruments such as syringes and chemical storage containers are usually sterilized and then filled with contents. During this sterilization, the instrument may be irradiated with electron beams or gamma rays. According to the studies by the present inventors, it has become clear that in a medical container using a conventional cyclic olefin-based resin, there is a possibility that radicals may be generated during sterilization by gamma ray irradiation and adversely affect the encapsulated chemical. In addition, although the influence of radicals generated by gamma ray irradiation decreases over time, a long period of time of several weeks is required until the influence of radicals disappears, which is not preferable from the viewpoint of improving productivity and shortening the process.

It has also become clear that electron beam or gamma ray irradiation may cause discoloration.

The present invention has been made in view of such circumstances . That is, the present invention provides a cyclic olefin copolymer for a medical instrument, which have a glass transition temperature at which the cyclic olefin copolymer can be molded into a shape of a container or the like and generate a small amount of radicals during gamma ray irradiation.

As a result of intensive studies, the present inventors have found that the above problems can be solved by a cyclic olefin copolymer containing a specific structural unit (A) having an aromatic ring.

That is, according to the present invention, there are provided a cyclic olefin copolymer for a medical instrument, a cyclic olefin copolymer composition for a medical instrument, and a molded body as described below.

[1] A cyclic olefin copolymer for a medical instrument, including: at least one structural unit (A) of the following (Ia), (II), and (III) :

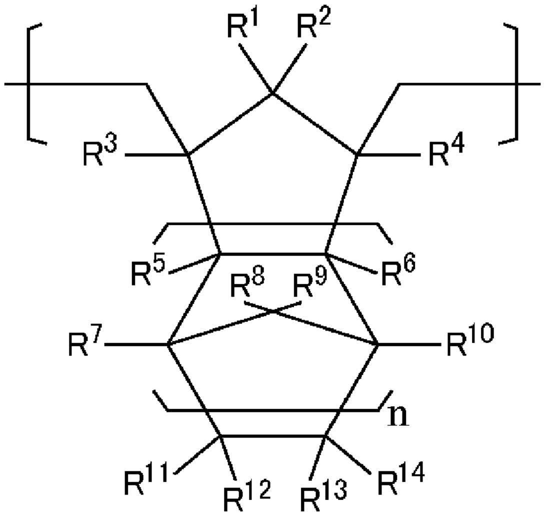

(Ia)

in the formula (Ia), n is 0, 1 or 2; $R^1$ to $R^{14}$ are each independently a hydrogen atom, a halogen atom other than a fluorine atom, or a hydrocarbon group having 1 to 20 carbon atoms which may be substituted with a halogen atom other than a fluorine atom; at least one of $R^{11}$ to $R^{14}$ is a bond; and either (Ib) or (Ic) is independently bonded to one or a plurality of bonding species;

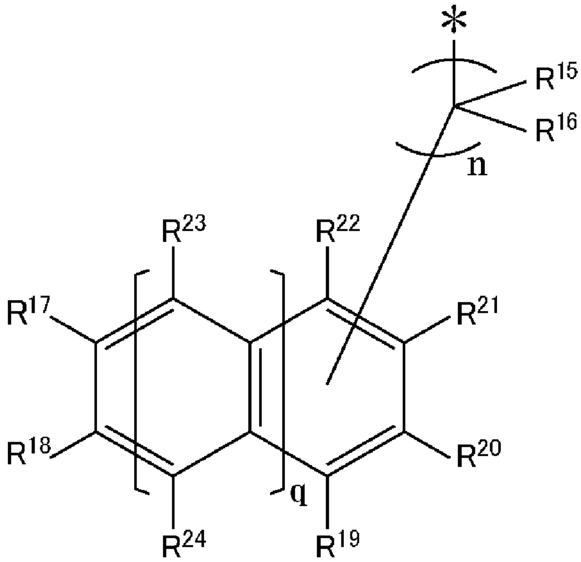

(Ib)

in the formula (Ib), n is 0 to 20; q is 0, 1 or 2; $R^{15}$ to $R^{24}$ are each independently a hydrogen atom, a halogen atom other than a fluorine atom, or a hydrocarbon group having 1 to 20 carbon atoms which may be substituted with a halogen atom other than a fluorine atom; one of $R^{17}$ to $R^{24}$ is a bond, wherein when q = 0, $R^{17}$ and $R^{18}$, $R^{18}$ and $R^{19}$, $R^{19}$ and $R^{20}$, $R^{20}$ and $R^{21}$, $R^{21}$ and $R^{22}$, and $R^{22}$ and $R^{17}$ may be bonded to each other to form a monocyclic ring or a polycyclic ring and when q = 1 or 2, $R^{17}$ and $R^{18}$, $R^{18}$ and $R^{24}$, $R^{24}$ and $R^{24}$, $R^{24}$ and $R^{19}$, $R^{19}$ and $R^{2o}$, $R^{20}$ and $R^{21}$, $R^{21}$ and $R^{22}$, $R^{22}$ and $R^{23}$, $R^{23}$ and $R^{23}$, and $R^{23}$ and $R^{17}$ may be bonded to each other to form a monocyclic ring or a polycyclic ring, and the monocyclic ring or the polycyclic ring may have a double bond, where the monocyclic ring or the polycyclic ring may be an aromatic ring;

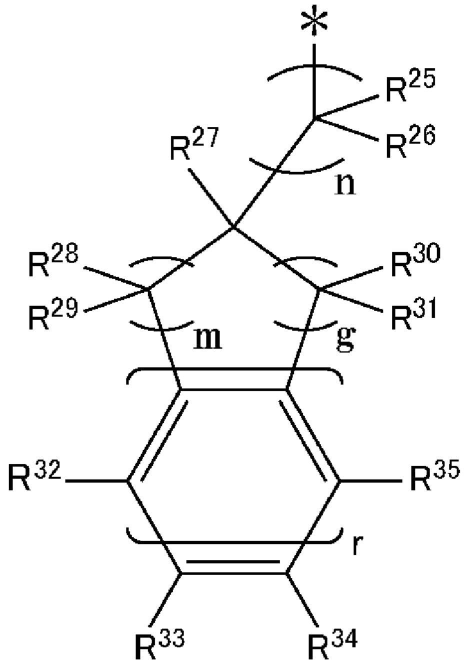

(Ic)

in the formula (Ic), n is 0 to 20; m and g are each independently 0 to 10; r is 1, 2 or 3; and $R^{25}$ to $R^{35}$ are each independently a hydrogen atom, a halogen atom other than a fluorine atom, or a hydrocarbon group having 1 to 20 carbon atoms which may be substituted with a halogen atom other than a fluorine atom, wherein when r = 1, $R^{32}$ and $R^{33}$, $R^{33}$ and $R^{34}$, and $R^{34}$ and $R^{35}$ may be bonded to each other to form a monocyclic ring or a polycyclic ring and when r = 2 or 3, $R^{32}$ and $R^{32}$, $R^{32}$ and $R^{33}$, $R^{33}$ and $R^{34}$, $R^{34}$ and $R^{35}$, and $R^{35}$ and $R^{35}$ may be bonded to each other to form a monocyclic ring or a polycyclic ring, and the monocyclic ring or the polycyclic ring may have a double bond, where the monocyclic ring or the polycyclic ring may be an aromatic ring;

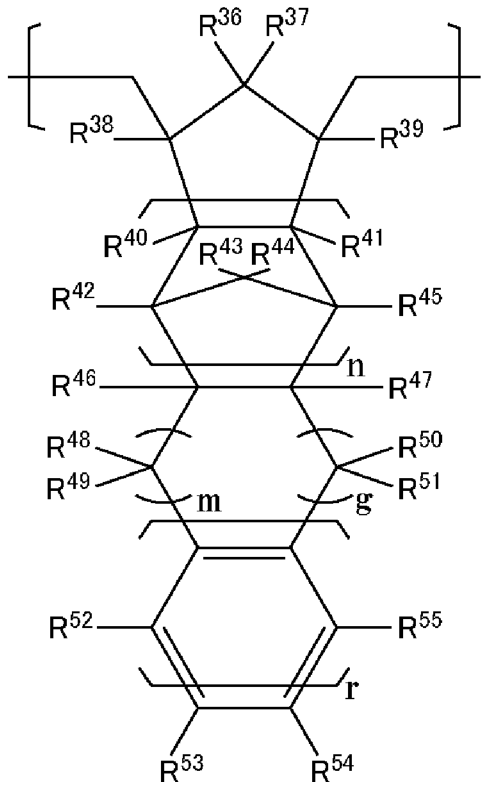

(II)

in the formula (II), n, m, and g are each independently 0, 1 or 2; r is 1, 2 or 3; and $R^{36}$ to $R^{55}$ are each independently

a hydrogen atom, a halogen atom other than a fluorine atom, or a hydrocarbon group having 1 to 20 carbon atoms which may be substituted with a halogen atom other than a fluorine atom, wherein when r = 1, $R^{52}$ and $R^{53}$, $R^{53}$ and $R^{54}$, and $R^{54}$ and $R^{55}$ may be bonded to each other to form a monocyclic ring or a polycyclic ring and when r = 2 or 3, $R^{52}$ and $R^{52}$, $R^{52}$ and $R^{53}$, $R^{53}$ and $R^{54}$, $R^{54}$ and $R^{55}$, and $R^{55}$ and $R^{55}$ may be bonded to each other to form a monocyclic ring or a polycyclic ring, where the monocyclic ring or the polycyclic ring may have a double bond, and the monocyclic ring or the polycyclic ring may be an aromatic ring, and $R^{48}$ and $R^{50}$ may be bonded to each other to form a monocyclic ring or a polycyclic ring, where the monocyclic ring or the polycyclic ring may have a double bond, and the monocyclic ring or the polycyclic ring may be an aromatic ring; and

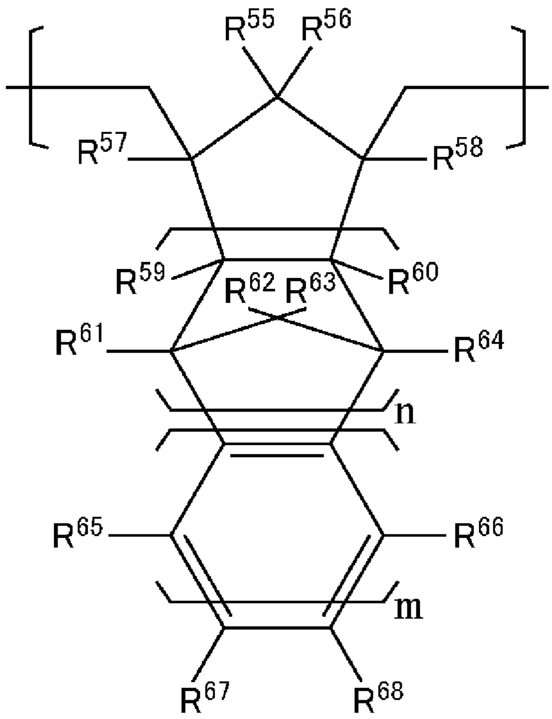

(III)

in the formula (III), n is 0, 1 or 2; m is 1, 2 or 3; and $R^{55}$ to $R^{68}$ are each independently a hydrogen atom, a halogen atom other than a fluorine atom, or a hydrocarbon group having 1 to 20 carbon atoms which may be substituted with a halogen atom other than a fluorine atom, wherein when m = 1, $R^{65}$ and $R^{67}$, $R^{67}$ and $R^{68}$, and $R^{68}$ and $R^{66}$ may be bonded to each other to form a monocyclic ring or a polycyclic ring and when m = 2 or 3, $R^{65}$ and $R^{65}$, $R^{65}$ and $R^{67}$, $R^{67}$ and $R^{68}$, $R^{68}$ and $R^{66}$, and $R^{66}$ and $R^{66}$ may be bonded to each other to form a monocyclic ring or a polycyclic ring, where the monocyclic ring or the polycyclic ring may have a double bond, and the monocyclic ring or the polycyclic ring may be an aromatic ring.

[2] The cyclic olefin copolymer for a medical instrument according to [1], in which a content of the structural unit (A) is 0.2 mol% or more and 100 mol% or less.

[3] The cyclic olefin copolymer for a medical instrument according to [1] or [2], further including a structural unit (B) derived from an olefin having 2 to 20 carbon atoms.

[4] The cyclic olefin copolymer for a medical instrument according to [3], in which the structural unit (B) has an alicyclic structure.

[5] The cyclic olefin copolymer for a medical instrument according to [3] or [4], in which when a total content of the structural unit (A) and the structural unit (B) is 100 mol%, a content of the structural unit (A) in the cyclic olefin copolymer is 0.5 mol% or more and 100 mol% or less.

[6] The cyclic olefin copolymer for a medical instrument according to any one of [1] to [5], in which a glass transition temperature (Tg) of the cyclic olefin copolymer is 80°C or more and 200°C or less, as measured by a differential scanning calorimeter (DSC).

[7] The cyclic olefin copolymer for a medical instrument according to any one of [1] to [6], in which the structural unit (A) is derived from at least one selected from benzonorbornadiene, indene norbornene and methylphenyl norbornene.

[8] A cyclic olefin copolymer composition for a medical instrument, including the cyclic olefin copolymer for a medical instrument according to any one of [1] to [7].

[9] A molded body including the cyclic olefin copolymer for a medical instrument according to any one of [1] to [7].

[10] The molded body according to [9], which is a syringe or a chemical storage container.

[11] The molded body according to [9], which is a biochip.

ADVANTAGEOUS EFFECTS OF INVENTION

According to the present invention, it is possible to provide a cyclic olefin copolymer for a medical instrument, a cyclic olefin copolymer composition for a medical instrument, and a molded body, which have a glass transition temperature at which the cyclic olefin copolymer can be molded into a shape of a container or the like and generate a small amount of radicals during gamma ray irradiation.

DESCRIPTION OF EMBODIMENTS

Hereinafter, the present invention will be described based on embodiments. In the present embodiment, "A to B" indicating the numerical range represent A or more and B or less unless otherwise specified.

[Cyclic olefin copolymer]

First, a cyclic olefin copolymer (P) for a medical instrument according to the present embodiment will be described.

The cyclic olefin copolymer (P) for a medical instrument according to the present embodiment is a cyclic olefin copolymer having an aromatic ring and is a cyclic olefin copolymer containing a structural unit (A). According to the cyclic olefin copolymer for a medical instrument of the present invention, by including the structural unit (A) having an aromatic ring, the cyclic olefin copolymer for a medical instrument is allowed to have properties generally required for medical instruments, have a glass transition temperature at which the cyclic olefin copolymer can be molded into a shape of a container or the like and provide a molded body that generates a small amount of radicals during gamma ray irradiation.

The cyclic olefin copolymer (P) according to the present invention is a cyclic olefin copolymer (P) for a medical instrument, and the properties generally required for medical instruments specifically mean good moldability at the time of molding, high transparency of molded body obtained therefrom, and the like.

Hereinafter, the cyclic olefin copolymer for a medical instrument is also simply referred to as a cyclic olefin copolymer.

Hereinafter, the structural unit (A) according to the present embodiment will be described.

The structural unit (A) according to the present embodiment includes at least one of the following structural units (Ia), (II), and (III).

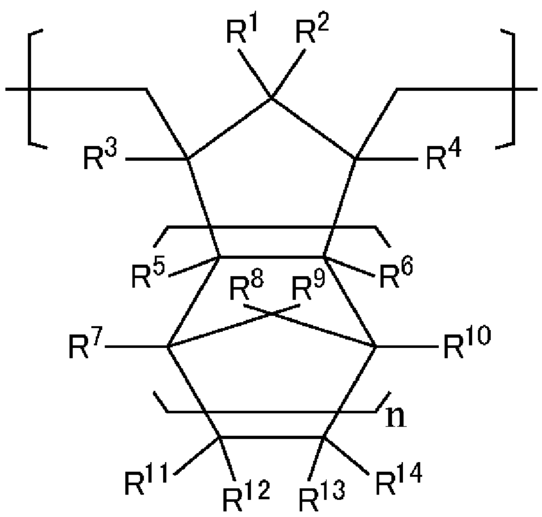

(Ia)

In the formula (Ia), n is 0, 1 or 2. $R^1$ to $R^{14}$ are each independently a hydrogen atom, a halogen atom other than a fluorine atom, or a hydrocarbon group having 1 to 20 carbon atoms which may be substituted with a halogen atom other than a fluorine atom. At least one of $R^{11}$ to $R^{14}$ is a bond, and either (Ib) or (Ic) is independently bonded to one or a plurality of bonding species.

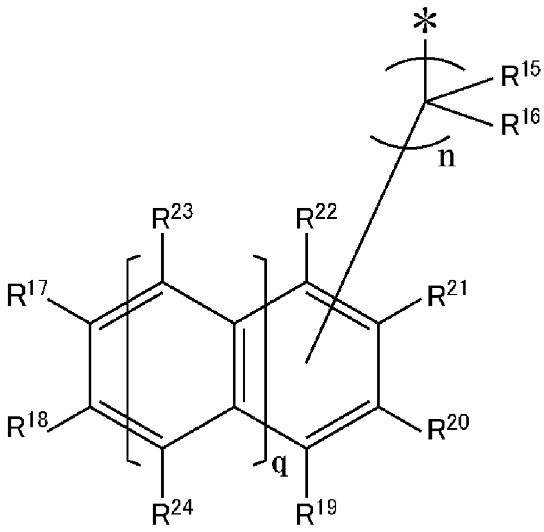

(Ib)

In the formula (Ib), n is 0 to 20, and q is 0, 1 or 2. $R^{15}$ to $R^{24}$ are each independently a hydrogen atom, a halogen atom other than a fluorine atom, or a hydrocarbon group having 1 to 20 carbon atoms which may be substituted with a halogen atom other than a fluorine atom. One of $R^{17}$ to $R^{24}$ is a bond, wherein when q = 0, $R^{17}$ and $R^{18}$, $R^{18}$ and $R^{19}$, $R^{19}$ and $R^{20}$, $R^{20}$ and $R^{21}$, $R^{21}$ and $R^{22}$, and $R^{22}$ and $R^{17}$ may be bonded to each other to form a monocyclic ring or a polycyclic ring and when q = 1 or 2, $R^{17}$ and $R^{18}$, $R^{18}$ and $R^{24}$, $R^{24}$ and $R^{24}$, $R^{24}$ and $R^{19}$, $R^{19}$ and $R^{20}$, $R^{20}$ and $R^{21}$, $R^{21}$ and $R^{22}$, $R^{22}$ and $R^{23}$, $R^{23}$ and $R^{23}$, and $R^{23}$ and $R^{17}$ may be bonded to each other to form a monocyclic ring or a polycyclic ring, where the monocyclic ring or the polycyclic ring may have a double bond, and the monocyclic ring or the polycyclic ring may be an aromatic ring.

In the formula (Ia), when the formula (Ib) is bonded to at least one of $R^{11}$ to $R^{14}$, at least one of $R^{11}$ to $R^{14}$ in the formula (Ia) may be a hydrocarbon group having 1 to 20 carbon atoms which may be substituted with a halogen atom other than a fluorine atom. In particular, in the formula (Ia), when the formula (Ib) is bonded to at least one of $R^{11}$ to $R^{14}$ and in the formula (Ib), when n is 0 to 2, at least one of $R^{11}$ to $R^{14}$ is preferably a hydrocarbon group having 1 to 20 carbon atoms which may be substituted with a halogen atom other than a fluorine atom.

Further, the structural unit (A) according to the present embodiment may not include a structural unit represented by the following formula (A'-1), (A'-2), or (A'-3):

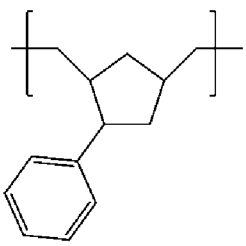

(A'-1)

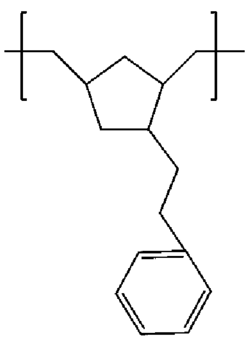

(A'-2)

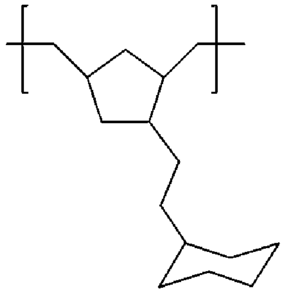

(A'-3)

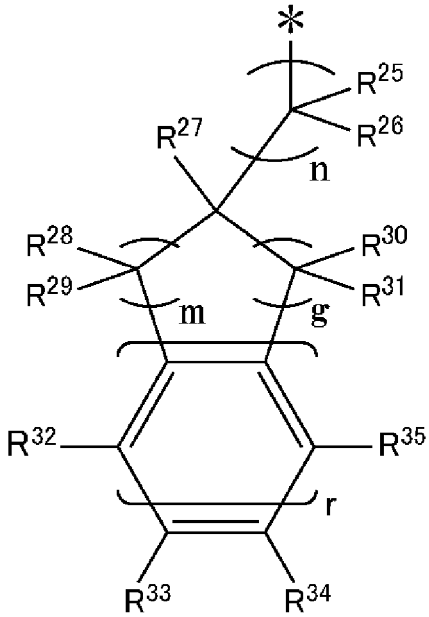

(Ic)

In the formula (Ic), n is 0 to 20, m and g are each independently 0 to 10, r is 1, 2 or 3. $R^{25}$ to $R^{35}$ are each independently a hydrogen atom, a halogen atom other than a fluorine atom, or a hydrocarbon group having 1 to 20 carbon atoms which may be substituted with a halogen atom other than a fluorine atom. When r = 1, $R^{32}$ and $R^{33}$, $R^{33}$ and $R^{34}$, and $R^{34}$ and $R^{35}$ may be bonded to each other to form a monocyclic ring or a polycyclic ring and when r = 2 or 3, $R^{32}$ and $R^{32}$, $R^{32}$ and $R^{33}$, $R^{33}$ and $R^{34}$, $R^{34}$ and $R^{35}$, and $R^{35}$ and $R^{35}$ may be bonded to each other to form a monocyclic ring or a polycyclic ring, where the monocyclic ring or the polycyclic ring may have a double bond, and the monocyclic ring or the polycyclic ring may be an aromatic ring.

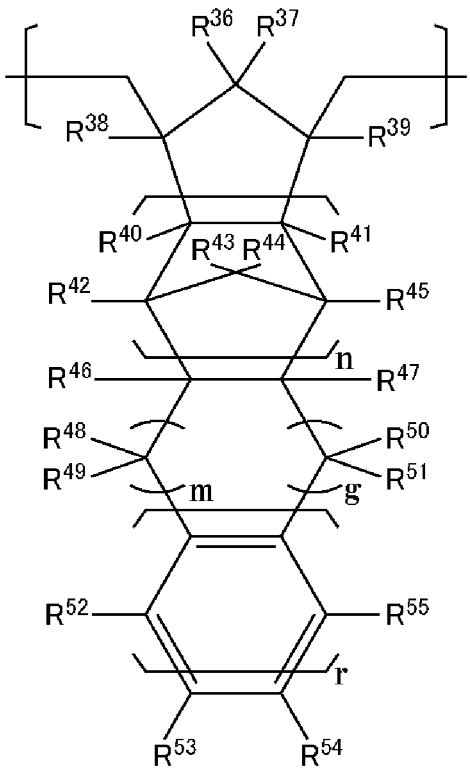

(II)

In the formula (II), n, m and g are each independently 0, 1 or 2, and r is 1, 2 or 3. $R^{36}$ to $R^{55}$ are each independently a hydrogen atom, a halogen atom other than a fluorine atom, or a hydrocarbon group having 1 to 20 carbon atoms which may be substituted with a halogen atom other than a fluorine atom. When r = 1, $R^{52}$ and $R^{53}$, $R^{53}$ and $R^{54}$, and $R^{54}$ and $R^{55}$ may be bonded to each other to form a monocyclic ring or a polycyclic ring and when r = 2 or 3, $R^{52}$ and $R^{52}$, $R^{52}$ and $R^{53}$, $R^{53}$ and $R^{54}$, $R^{54}$ and $R^{55}$, and $R^{55}$ and $R^{55}$ may be bonded to each other to form a monocyclic ring or a polycyclic ring, where the monocyclic ring or the polycyclic ring may have a double bond, and the monocyclic ring or the polycyclic ring may be an aromatic ring, and $R^{48}$ and $R^{50}$ may be bonded to each other to form a monocyclic ring or a polycyclic ring, where the monocyclic ring or the polycyclic ring may have a double bond, and the monocyclic ring or the polycyclic ring may be an aromatic ring.

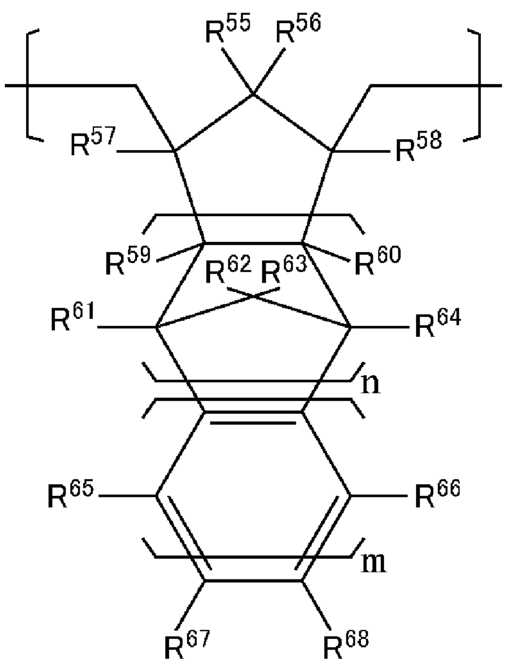

(III)

In the formula (III), n is 0, 1 or 2, and m is 1, 2 or 3. $R^{55}$ to $R^{68}$ are each independently a hydrogen atom, a halogen atom other than a fluorine atom, or a hydrocarbon group having 1 to 20 carbon atoms which may be substituted with a halogen atom other than a fluorine atom. When m = 1, $R^{65}$ and $R^{67}$, $R^{67}$ and $R^{68}$, and $R^{68}$ and $R^{66}$ may be bonded to each other to form a monocyclic ring or a polycyclic ring and when m = 2 or 3, $R^{65}$ and $R^{65}$, $R^{65}$ and $R^{67}$, $R^{67}$ and $R^{68}$, $R^{68}$ and $R^{66}$, and $R^{66}$ and $R^{66}$ may be bonded to each other to form a monocyclic ring or a polycyclic ring, where the monocyclic ring or the polycyclic ring may have a double bond, and the monocyclic ring or the polycyclic ring may be an aromatic ring.

Examples of the hydrocarbon group having 1 to 20 carbon atoms include, each independently, an alkyl group having 1 to 20 carbon atoms, a cycloalkyl group having 3 to 15 carbon atoms, and an aromatic hydrocarbon group. More specific examples of the alkyl group include a methyl group, an ethyl group, a propyl group, an isopropyl group, an amyl group, a hexyl group, an octyl group, a decyl group, a dodecyl group, and an octadecyl group, examples of the cycloalkyl group include a cyclohexyl group, and examples of the aromatic hydrocarbon group include an aryl group or an aralkyl group such as a phenyl group, a trill group, a naphthyl group, a benzyl group and a phenylethyl group. These hydrocarbon groups may be substituted with a halogen atom other than a fluorine atom.

The general formulas (Ia), (II), and (III) also include their respective resonance structures.

Among these structural units, the structural unit (A) according to the present embodiment is preferably a structural unit derived from at least one selected from benzonorbornadiene, indene norbornene, phenyl norbornene, methylphenyl norbornene and the following general formula (A-5), and is particularly preferably a structural unit derived from benzonorbornadiene and indene norbornene.

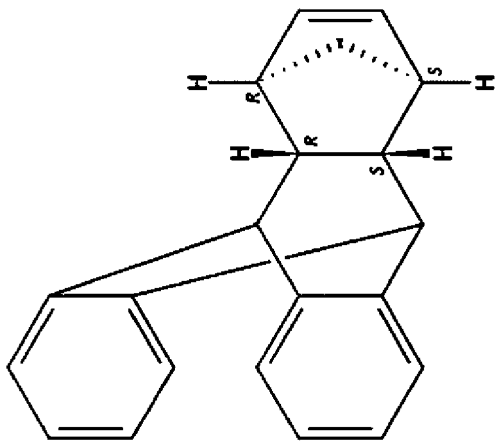

(A−5)

Specifically, the structural unit derived from indene norbornene, the structural unit derived from benzonorbornadiene, and the structural unit derived from methylphenyl norbornene means structural units represented by the following formulas (A-2), (A-3), and (A-4), respectively.

That is, the structural unit (A) according to the present embodiment is preferably any of the following structural units (A-2), (A-3), and (A-4):

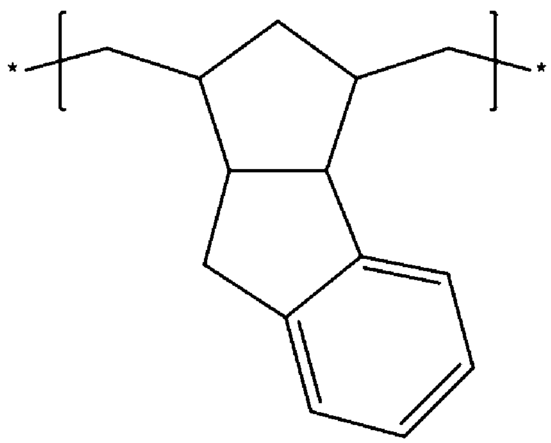

(A−2)

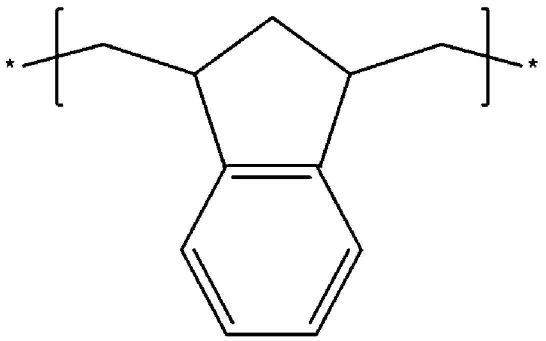

(A−3)

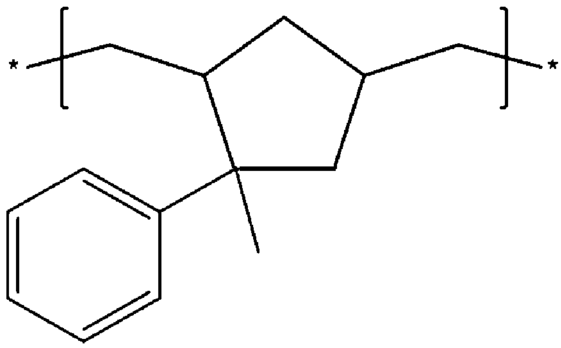

(A−4)

(Structural unit (B) derived from an olefin having 2 to 20 carbon atoms)

The cyclic olefin copolymer according to the present embodiment may also contain a structural unit (B) derived from an olefin having 2 to 20 carbon atoms. The structural unit (B) may be a structural unit derived from a cyclic olefin having no aromatic ring.

The structural unit (B) preferably has an alicyclic structure. When the structural unit (B) has an alicyclic structure, it is possible to obtain a cyclic olefin copolymer for a medical instrument that has a glass transition temperature at which the cyclic olefin copolymer can be molded into a shape of a container or the like and that can provide a molded body that generates a small amount of radicals during gamma ray irradiation.

Further, the structural unit (B) more preferably has a 5-membered alicyclic structure. When the structural unit (B) is a structural unit having a 5-membered alicyclic structure, the time required for the reaction to form the structural unit (A) and the time required for the reaction to form the structural unit (B) can be substantially the same, and thus the cyclic olefin copolymer having the structural unit (A) and the structural unit (B) can be efficiently produced, which is preferable in terms of production.

The structural unit (B) according to the present embodiment preferably contains a structural unit derived from a compound represented by the following formula (B-1) from the viewpoint of obtaining a cyclic olefin copolymer for a medical instrument that has a glass transition temperature at which the cyclic olefin copolymer can be molded into a shape of a container or the like and that can provide a molded body that generates a small amount of radicals during gamma ray irradiation.

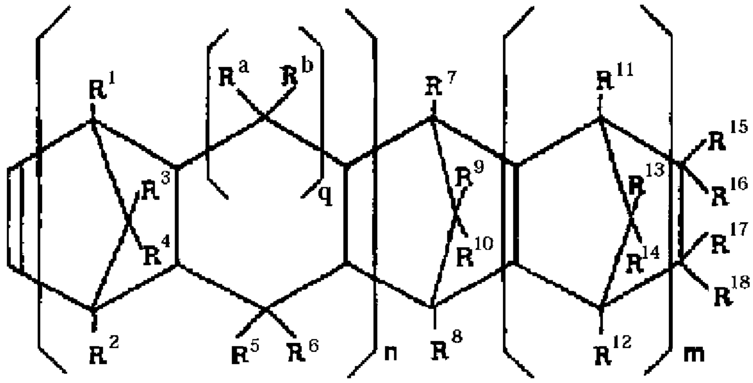

. . . (B−1)

in the formula [B-1], n is 0 or 1, m is 0 or a positive integer, q is 0 or 1, and $R^1$ to $R^{18}$ and $R^a$ and $R^b$ are each independently a hydrogen atom, a halogen atom, or a hydrocarbon group which may be substituted with a halogen atom, $R^{15}$ to $R^{18}$ may be bonded to each other to form a monocyclic ring or a polycyclic ring, where the monocyclic ring or a polycyclic ring may have a double bond, and $R^{15}$ and $R^{16}$ or $R^{17}$ and $R^{18}$ may form an alkylidene group, provided that an aromatic ring is not included.

Among these structural units, the structural unit (B) according to the present embodiment preferably contains at least one structural unit selected from a structural unit derived from bicyclo[2.2.1]-2-heptene (abbreviation: NB), a structural unit derived from tetracyclo [4.4.0.$1^{2,5}$.$1^{7,10}$]-3-dodecene (abbreviation: TD), a structural unit derived from hexacyclo[6,6,1,$1^{3,6}$,$1^{10,13}$,$0^{2,7}$,$0^{9,14}$]heptadecene-4, a structural unit derived from ethyl norbornene (abbreviation: ENB), a structural unit derived from dicyclopentadiene (abbreviation: DCPD), a structural unit derived from the hydride of DCPD, a structural unit derived from tricyclo undecene (abbreviation; TCU, 1,4,4a,5,6,7,8,8a-Octahydro-1,4-methanonaphthalene) and the like, more preferably contains at least one structural unit selected from a structural unit derived from bicyclo[2.2.1]-2-heptene and a structural unit derived from tetracyclo [4.4.0.$1^{2,5}$.$1^{7,10}$]-3-dodecene, and particularly preferably contains a structural unit derived from tetracyclo[4.4.0.$1^{2,5}$.$1^{7,10}$]-3-dodecene.

In addition, the structural unit derived from tetracyclo[4.4.0.$1^{2,5}$.$1^{7,10}$]-3-dodecene specifically means a structural unit represented by the following formula (B-2). That is, the structural unit (B) according to the present embodiment preferably includes a structural unit represented by the following formula (B-2):

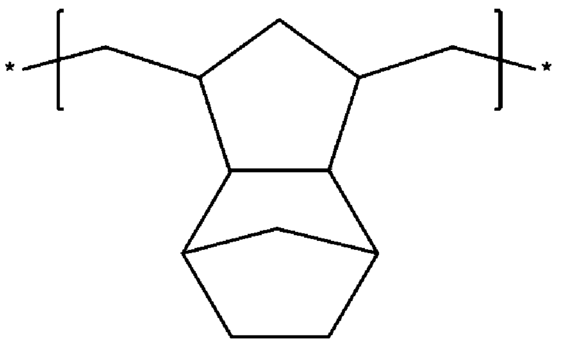

(B-2)

Further, the structural unit derived from DCPD specifically means a structural unit represented by the following formula (B-3) or formula (B-4).

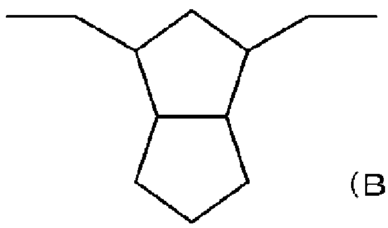

(B−3)

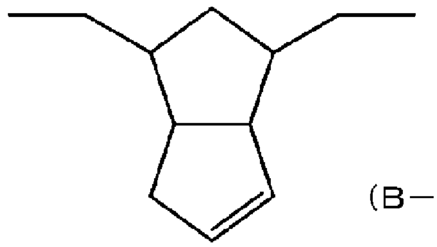

(B−4)

In the cyclic olefin copolymer (P) according to the present embodiment, the content of the structural unit (A) is preferably 0.2 mol% or more and 100 mol% or less, more preferably 1 mol% or more and 100 mol% or less, and still more preferably 4 mol% or more and 80 mol% or less.

Further, in the cyclic olefin copolymer (P), when the total content of the structural unit (A) and the structural unit (B) is 100 mol%, the structural unit (A) in the cyclic olefin copolymer is preferably 0.5 mol% or more and 100 mol% or less, more preferably 1 mol% or more and 100 mol% or less, and still more preferably 4 mol% or more and 80 mol% or less.

In the present embodiment, the contents of the structural unit (A) and the structural unit (B) can be measured, for example, by $^{1}$H-NMR or $^{13}$C-NMR.

By setting the content of each structural unit contained in the cyclic olefin copolymer (P) within the above numerical range, it is possible to obtain a cyclic olefin copolymer for a medical instrument that has a glass transition temperature at which the cyclic olefin copolymer can be molded into a shape of a container or the like and that can provide a molded body that generates a small amount of radicals during gamma ray irradiation.

In the cyclic olefin copolymer (P) according to the present embodiment, the content of the aromatic ring is preferably 0.01 mol% or more and 71 mol% or less, more preferably 0.1 mol% or more and 65 mol% or less, and still more preferably 0.2 mol% or more and 60 mol% or less. The content of the aromatic ring can be determined by calculating the peak area of the hydrogen peak (6.7 to 7.3 ppm) derived from the aromatic ring relative to the total area of all hydrogen-derived peaks detected by $^{1}$H-NMR.

By setting the content of the aromatic ring contained in the cyclic olefin copolymer (P) within the above numerical range, it is possible to obtain a cyclic olefin copolymer for a medical instrument that has a glass transition temperature at which the cyclic olefin copolymer can be molded into a shape of a container or the like and that can provide a molded body that generates a small amount of radicals during gamma ray irradiation.

The copolymerization type of the cyclic olefin copolymer (P) according to the present embodiment is not particularly limited, but examples thereof include a random copolymer and a block copolymer. In the present embodiment, the cyclic olefin copolymer (P) according to the present embodiment is preferably a random copolymer from the viewpoint of obtaining a cyclic olefin copolymer for a medical instrument that has a glass transition temperature at which the cyclic olefin copolymer can be molded into a shape of a container or the like and that can provide a molded body that generates a small amount of radicals during gamma ray irradiation.

[Method for producing cyclic olefin copolymer]

The method for producing the cyclic olefin copolymer (P) according to the present embodiment is not particularly limited as long as the cyclic olefin copolymer containing at least one structural unit (A) of the above (Ia), (II), and (III) can be obtained, for example, by carrying out a step of obtaining a precursor polymer (precursor polymer polymerization step) and a step of partially hydrogenating the obtained precursor polymer (partial hydrogenation step).

That is, in the production of the cyclic olefin ring-opening polymer, it is common to carry out a hydrogenation step. In a case where the hydrogenation step is carried out, even if the precursor polymer serving as a raw material monomer or an intermediate has an aromatic ring (for example, a benzyl group), the aromatic ring does not remain in the obtained cyclic olefin copolymer because the benzyl group is reduced to a cyclohexane group in the hydrogenation step. It is considered that the cyclic olefin copolymer (P) of the present invention can be obtained by using a monomer having a benzyl functional group as a raw material, subjecting the monomer to partial hydrogenation to obtain a cyclic olefin copolymer containing a cyclic olefin copolymer in a main chain and a specific structural unit (A) having a benzyl group in a side chain, thereby obtaining cyclic olefin copolymer for a medical instrument that has a glass transition temperature at which the cyclic olefin copolymer can be molded into a shape of a container or the like and that can provide a molded body that generates a small amount of radicals during gamma ray irradiation.

[Precursor polymer polymerization step]

The precursor polymer according to the present embodiment can be produced by selecting appropriate conditions according to methods disclosed in, for example, Japanese Unexamined Patent Publication No. S60-168708, Japanese Unexamined Patent Publication No. S61-120816, Japanese Unexamined Patent Publication No. S61-115912, Japanese Unexamined Patent Publication No. S61-115916, Japanese Unexamined Patent Publication No. S61-271308, Japanese Unexamined Patent Publication No. S61-272216, Japanese Unexamined Patent Publication No. S62-252406, Japanese Unexamined Patent Publication No. S62-252407, Japanese Unexamined Patent Publication No. 2007-314806, and Japanese Unexamined Patent Publication No. 2010-241932.

[Partial hydrogenation step]

Examples of methods for partial hydrogenation of the resulting precursor polymer include the methods disclosed in Stephen F. Hahn, An Improvement Method for the Diimide Hydrogenation of Butadiene and Isoprene Containing Polymers, Journal of Polymer Science Part A: polymer Chemistry, 30 (3) 1992, or high-pressure hydrogenation with a palladium carbon catalyst.

The glass transition temperature (DSC) of the cyclic olefin copolymer (P) according to the present embodiment measured by a differential scanning calorimeter (Tg) is preferably 80°C or more and 200°C or less, more preferably 100°C or more and 190°C or less, and still more preferably 110°C or more and 180°C or less, from the viewpoint of improving heat resistance while maintaining good transparency of the obtained medical instrument.

The intrinsic viscosity [η] (in 135°C decalin) of the cyclic olefin copolymer (P) according to the present embodiment is, for example, 0.05 to 5.0 dl/g, preferably 0.1 to 4.0 dl/g, more preferably 0.2 to 2.0 dl/g, and particularly preferably 0.3 to 1.0 dl/g.

When the intrinsic viscosity [η] is the lower limit value or more, the mechanical strength of the medical instrument can be improved. Further, when the intrinsic viscosity [η] is the upper limit value or less, the moldability can be improved.

[Cyclic olefin copolymer composition]

A cyclic olefin copolymer composition for a medical instrument according to the present embodiment contains the cyclic olefin copolymer (P) for a medical instrument according to the present embodiment, and may optionally include other components other than the cyclic olefin copolymer (P) for a medical instrument. In the present embodiment, even in a case where the cyclic olefin copolymer composition for a medical instrument according to the present embodiment contains only the cyclic olefin copolymer (P) for a medical instrument, the composition is also called a cyclic olefin copolymer composition for a medical instrument.

Further, when the total amount of the cyclic olefin copolymer composition for a medical instrument is 100% by mass, the content of the cyclic olefin copolymer (P) for a medical instrument in the cyclic olefin copolymer composition for a medical instrument according to the present embodiment is preferably 50% by mass or more and 100% by mass or less, more preferably 70% by mass or more and 100% by mass or less, still more preferably 80% by mass or more and 100% by mass or less, and particularly preferably 90% by mass or more and 100% by mass or less, from the viewpoint of further improving the performance balance between the transparency, the heat resistance, and the density of the obtained molded body.

Since the cyclic olefin copolymer composition for a medical instrument according to the present embodiment contains the cyclic olefin copolymer (P) for a medical instrument in the above-described ratio, it is possible to obtain a molded body having a glass transition temperature at which the cyclic olefin copolymer composition for a medical instrument can be molded into a shape of a container or the like and generating a small amount of radicals during gamma ray irradiation.

(Other components)

The cyclic olefin copolymer composition according to the present embodiment may optionally contain a weathering stabilizer, a heat stabilizer, an antioxidant, a metal deactivator, a hydrochloric acid absorbent, an antistatic agent, a flame retardant, a slip agent, an anti-blocking agent, an anti-fogging agent, a lubricant, a natural oil, a synthetic oil, a wax, an organic or inorganic filler, and the like in an appropriate amount to the extent that objects of the present invention is not impaired.

The cyclic olefin copolymer composition according to the present embodiment may optionally contain a hindered amine-based compound [C].

As the hindered amine-based compound [C] (hereinafter, also simply referred to as compound [C] or [C]), a compound having one or two or more hindered amine structures (specifically, a partial structure represented by the following formula (b1)) can be appropriately used.

In the formula (b1), * represents a bond with another chemical structure.

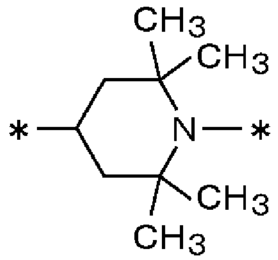

・・・(b1)

Specifically, as the compound [C], a compound known as a hindered amine-based light stabilizer (abbreviated as HALS) or the like can be used.

Examples of the compound [C] include hindered amine-based compounds disclosed in paragraphs 0058 to 0082 of International Publication WO2006/112434, hindered amine compounds disclosed in paragraphs 0124 to 0186 of International Publication WO2008/047468, piperidine derivatives or salts thereof disclosed in paragraphs 0187 to 0226 of International Publication WO2008/047468, and polyamine derivatives or salts thereof disclosed in Japanese Unexamined Patent Publication No. 2006-321793.

Commercially available products such as Chimassorb 2020, Chimassorb 944, Tinuvin 622, Tinuvin PA144, Tinuvin 765, and Tinuvin 770 (all manufactured by BASF), Cyasorb UV-3853, Cyasorb UV-3529, Cyasorb UV-3346 and Cyasorb UV-531 (all manufactured by Cytec Industries Incorporated), ADK STAB LA-52, ADK STAB LA-57, ADK STAB LA-63P, ADK STAB LA-68, ADK STAB LA-72, ADK STAB LA-77Y, ADK STAB LA-81, ADK STAB LA-82 and ADK STAB LA-87 (all manufactured by ADEKA Corporation) can also be used.

In the present embodiment, the compound [C] is preferably a compound having a structural unit represented by the following general formula (b2).

This compound is typically a polymer or oligomer. It is considered that by using the compound [C], which is a polymer or an oligomer such as this compound, the compatibility with the cyclic olefin copolymer (P) can be enhanced and the composition can be made more uniform. Further, it is considered that the structure is unlikely to change to have characteristic absorption by irradiation. It is considered that this makes it possible to reduce discoloration due to electron beam or gamma ray irradiation, and to reduce the generation of radicals due to electron beam or gamma ray irradiation.

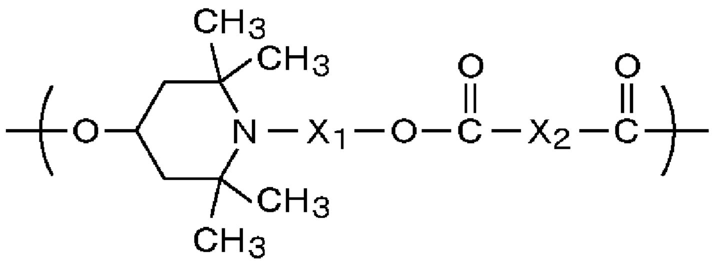

・・・(b2)

In the general formula (b2), $X_1$ and $X_2$ each independently represent a divalent linking group.

Examples of the divalent linking group of $X_1$ and $X_2$ include an alkylene group, a cycloalkylene group, an arylene group, and a group in which these groups are linked. Among these, an alkylene group is preferable, an alkylene group having 1 to 6 carbon atoms is more preferable, and an alkylene group having 1 to 4 carbon atoms is much more preferable.

As the compound having the structural unit represented by the general formula (b2), a commercially available product may be used, or the compound may be obtained by condensation polymerization of corresponding diols and dicarboxylic acids.

The compound [C] may be used alone or in combination of two or more.

When the content of the cyclic olefin copolymer (P) is 100 parts by mass, the content of the compound [C] in the composition is, for example, 0.01 to 2.0 parts by mass, preferably 0.05 to 1.5 parts by mass, and more preferably 0.10 to 1.0 parts by mass. Within this range, it is possible to effectively reduce discoloration and radical generation due to electron beam or gamma ray irradiation while maintaining other performances (for example, moldability and mechanical strength).

The cyclic olefin copolymer composition according to the present embodiment may optionally contain a phosphorus-based compound [D].

There are no particular restrictions on the phosphorus-based compound [D] that can be used (hereinafter, also simply referred to as compound [D] or [D]). For example, a known phosphorus-based antioxidant can be used.

The phosphorus-based antioxidant is not particularly limited, and a conventionally known phosphorus-based

antioxidant (for example, a phosphite-based antioxidant) can be used.

Specific examples thereof include monophosphite compounds such as triphenyl phosphite, diphenylisodecyl phosphite, phenyldiisodecyl phosphite, tris(nonylphenyl)phosphite, tris(dinonylphenyl)phosphite, tris(2,4-di-t-butylphenyl)phosphite, tris(2-t-butyl-4-methylphenyl)phosphite, tris(cyclohexylphenyl)phosphite, 2,2-methylenebis(4,6-di-t-butylphenyl)octylphosphite, 9,10-dihydro-9-oxa-10-phosphaphenanthrene-10-oxide, 10-(3,5-di-t-butyl-4-hydroxybenzyl)-9,10-dihydro-9-oxa-10-phosph aphenanthrene-10-oxide, and 10-decyloxy-9,10-dihydro-9-oxa-10-phosphaphenanthrene; and diphosphite compounds such as 4,4'-butylidene-bis(3-methyl-6-t-butylphenyl-di-tridecylphosphit e), 4,4'-isopropylidene-bis(phenyl-di-alkyl(C12 to C15)phosphite), 4,4'-isopropylidene-bis(diphenylmonoalkyl(C12 to C15)phosphite), 1,1,3-tris(2-methyl-4-di-tridecylphosphite-5-t-butylphenyl) butan e, tetrakis(2,4-di-t-butylphenyl)-4,4'- biphenylenediphosphite, cyclic neopentanetetraylbis(isodecyl phosphite), cyclic neopentanetetraylbis(nonylphenyl phosphite), cyclic neopentanetetraylbis(2,4-di-t-butylphenyl phosphite), cyclic neopentanetetraylbis(2,4-dimethylphenyl phosphite), and cyclic neopentanetetraylbis(2,6-di-t-butylphenyl phosphite).

The compound [D] preferably used is a trivalent organic phosphorus compound. More specifically, the compound [D] is a compound having a structure in which three hydrogen atoms of phosphorous acid ($P(OH)_3$) are each substituted with the same or different organic groups.

More specifically, the compound [D] is preferably a compound represented by the following general formulas (c1), (c2) or (c3).

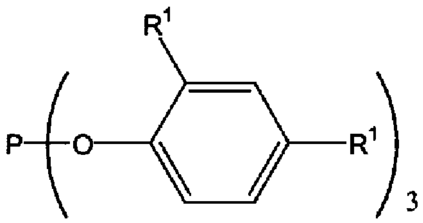

(c1)

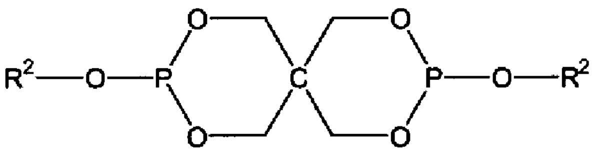

(c2)

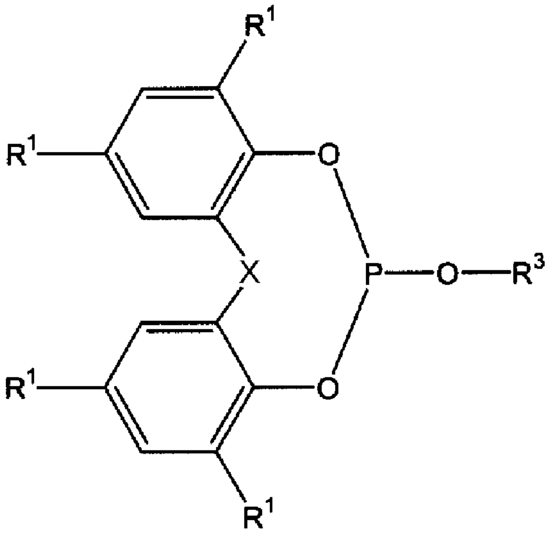

(c3)

In the general formulas (c1), (c2) and (c3),

when there are a plurality of groups, each $R^1$ independently represents an alkyl group,
when there are a plurality of groups, each $R^2$ independently represents an aromatic group,
$R^3$ represents an alkyl group, a cycloalkyl group, an aryl group or an aralkyl group, and
X represents a single bond or a divalent linking group.

The alkyl group for $R^1$ preferably has 1 to 10 carbon atoms, and is more preferably a t-butyl group.

Examples of the aromatic group for $R^2$ include a phenyl group, a naphthyl group, and a group in which these are substituted with an alkyl group or the like.

The number of carbon atoms of $R^3$ is preferably 1 to 30, more preferably 3 to 20, and still more preferably 6 to 18.

$R^3$ is preferably an aryl group or an aralkyl group, and more preferably an aralkyl group. The aryl group or aralkyl group may be further substituted with a substituent (for example, an alkyl group having 1 to 6 carbon atoms or a hydroxy group).

Specific examples thereof when X is a divalent linking group include an alkylene group (methylene group), and an ether group (-O-). X is preferably a single bond.

The compound [D] may be used alone or in combination of two or more.

When the amount of the cyclic olefin copolymer (P) is 100 parts by mass, the content of the compound [D] in the composition is, for example, 0.01 to 1.5 parts by mass, preferably 0.02 to 1.0 parts by mass, and more preferably 0.05 to 0.5 parts by mass. Within this range, it is possible to effectively reduce discoloration and radical generation due to electron beam or gamma ray irradiation while maintaining other performances (for example, moldability and mechanical strength).

On the other hand, as another viewpoint, when the amount of the cyclic olefin copolymer (P) is 100 parts by mass, the content of the phosphorus-based compound [D] is preferably less than 0.05 parts by mass, more preferably 0.03 parts by mass or less, and still more preferably 0.02 parts by mass or less.

The cyclic olefin copolymer composition according to the present embodiment may optionally contain a phenol-based stabilizer as a weathering stabilizer.

Examples of the phenol-based stabilizer include hindered phenol-based stabilizers such as 3,3',3",5,5',5"-hexa-tert-butyl-a,a',a"-(methylene-2,4,6-triy l)tri-p-cresol, 1,3,5-trimethyl-2,4,6-tris (3,5-di-tert-butyl-4-hydroxyphenyl)benzylbenzene, pentaerythritol tetrakis[3-(3,5-di-tert-butyl-4-hydroxyphenyl)propionate], octadecyl-3-(3,5-di-tert-butyl-4-hydroxyphenyl)propionate, and thiodiethylene bis[3-(3,5-di-tert-butyl-4-hydroxyphenyl)propionate];acrylate-ba sed phenolic compounds such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl)ethyl) phenyl acrylate disclosed in Japanese Unexamined Patent Publication No. S63-179953 and Japanese Unexamined Patent Publication No. H1-168643;alkyl-substituted phenol-based compounds such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1 ,1-dimethylethyl)-2,4,8,10-tetraoxaspiro[5.5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzen e, tetrakis(methylene-3-(3',5'-di-t-butyl-4'-hydroxyphenylpropionat e)methane [i.e., pentaerythrimethyl-tetrakis(3-(3,5-di-t-butyl-4-hydroxyphenylpro pionate)], triethylene glycol bis(3-(3-t-butyl-4-hydroxy-5-methylphenyl)propionate], and tocophenol; and triazine group-containing phenol-based compounds such as 6-(4-hydroxy-3,5-di-t-butylanilino)-2,4-bisoctylthio-1,3,5-triaz ine, 6-(4-hydroxy-3,5-dimethylanilino)-2,4-bisoctylthio-1,3,5-triazin e, 6-(4-hydroxy-3-methyl-5-t-butylanilino)-2,4-bisoctylthio-1,3,5-t riazine, and 2-octylthio-4,6-bis-(3,5-di-t-butyl-4-oxyanilino)-1,3,5-triazine ; and the like.

The content of the phenol-based stabilizer is preferably less than 0.05 parts by mass, more preferably 0.03 parts by mass or less, and still more preferably 0.02 parts by mass or less.

The cyclic olefin copolymer composition according to the present embodiment can be obtained by a method of melt-kneading the cyclic olefin copolymer (P) and other components using a known kneading apparatus such as an extruder and a Banbury mixer; a method of dissolving the cyclic olefin copolymer (P) and other components in a common solvent and then evaporating the solvent; a method of adding a solution of the cyclic olefin copolymer (P) and other components in a poor solvent to cause precipitation; or the like.

[Molded body]

A molded body according to the present embodiment is a molded body containing the cyclic olefin copolymer (P) for a medical instrument according to the present embodiment.

Further, when the total amount of the molded body is 100% by mass, the content of the cyclic olefin copolymer (P) for a medical instrument in the molded body according to the present embodiment is preferably 50% by mass or more and 100% by mass or less, more preferably 70% by mass or more and 100% by mass or less, still more preferably 80% by mass or more and 100% by mass or less, and particularly preferably 90% by mass or more and 100% by mass or less, from the viewpoint of further improving the performance balance between the radiation resistance and the transparency of the molded body.

The molded body according to the present embodiment can be obtained by molding a resin composition containing the cyclic olefin copolymer (P) into a predetermined shape. The method for obtaining a molded body by molding the resin composition containing the cyclic olefin copolymer (P) is not particularly limited, and a known method can be

used. Depending on its use and shape, for example, extrusion molding, injection molding, compression molding, inflation molding, blow molding, extrusion blow molding, injection blow molding, press molding, vacuum molding, powder slush molding, calendar molding, foam molding and the like can be applied. Among these, the injection molding method is preferable from the viewpoint of moldability and productivity. The molding conditions are appropriately selected depending on the purpose of use or the molding method. For example, the resin temperature in injection molding is appropriately selected in the range of usually 150°C to 400°C, preferably 200°C to 350°C, and more preferably 230°C to 330°C.

Further, in the cyclic olefin copolymer (P) according to the present embodiment, from the viewpoint of further improving the transparency of a molded body to be obtained, when an inj ection-molded sheet having a thickness of 2.0mm is prepared from the cyclic olefin copolymer (P), the haze of the injection-molded sheet measured in accordance with JIS K7136 is preferably less than 5%.

Since the molded body according to the present embodiment contains the cyclic olefin copolymer (P) for a medical instrument according to the present embodiment, the molded body has good moldability and high transparency during molding, has a glass transition temperature at which the molded body can be molded into a shape of a container or the like, and generates a small amount of radicals during gamma ray irradiation. Therefore, it is suitable for medical instruments. The molded body according to the present embodiment can be made into, for example, a syringe, a chemical storage container, or a biochip.

[Medical instrument]

Next, the medical instrument of the embodiment according to the present invention will be described.

The medical instrument according to the present embodiment contains the cyclic olefin copolymer (P) or the cyclic olefin copolymer composition according to the present embodiment.

Since the medical instrument according to the present embodiment contains the cyclic olefin copolymer (P), it is excellent in a performance balance between the transparency and gamma ray resistance or electron beam resistance. This medical instrument has little discoloration due to electron beam or gamma ray irradiation.

Here, according to another study by the present inventors, it has become clear that radicals may be generated by electron beam or gamma ray irradiation in conventional medical instruments. As a result, there is a concern that there is a risk of deterioration of the contents after filling the medical container such as a chemical storage container with the content.

On the other hand, the medical instrument according to the present embodiment can reduce the amount of radicals generated by electron beam or gamma ray irradiation. Therefore, according to the medical instrument according to the present embodiment, it is possible to reduce the risk of deterioration of the contents.

Further, for example, by irradiating the medical instrument produced above with gamma rays or electron beams, it is possible to obtain a gamma ray or electron beam irradiated object (medical instrument irradiated with gamma rays or electron beams) for the medical instruments. Since the medical instrument is sterilized by irradiation, the medical instrument is clean, and discoloration and generation of radicals are suppressed. The irradiation dose is not particularly limited, but is usually 5 to 100 kilogray (kGy), preferably 10 to 80 kilogray.

Examples of the medical instruments include a catheter member, a sterilization sheet, a medical container, and a biochip.

Examples of the medical container include a syringe barrel outer cylinder (hereinafter, syringe) of a syringe, a syringe used for a syringe barrel filled with a chemical or a drug (hereinafter, also referred to as a prefilled syringe), and a storage container used for a storage container filled with a chemical or a drug (hereinafter, also referred to as a chemical storage container.).

Here, the prefilled syringe is a syringe-shaped preparation that is pre-filled with a chemical or a drug, and there are a single-chamber type that is filled with one kind of solution and a double-chamber type that is filled with two kinds of drugs. Most prefilled syringes are single-chamber type, but there are two types of double-chamber syringes, which include either liquid/powder type preparations, which consist of powder and its solution, or liquid/liquid type preparations, which consist of two types of solution. Examples of the single-chamber type internal solution include a heparin solution. Examples of the syringe and a prefilled syringe used for a syringe include a prefillable syringe, a prefilled syringe for a vaccine, a prefilled syringe for an anticancer agent, and a needleless syringe.

Examples of the chemical storage container include a wide-mouthed bottle, a narrow-mouthed bottle, a medicine bottle, a vial bottle, an infusion bottle, a bulk container, a petri dish, a test tube, and an analysis cell. More specific examples thereof include liquid, powder or solid drug containers such as ampoules, press-through packages, infusion bags, drip containers and eye drop containers; sample containers such as blood test sampling test tubes, blood collection tubes and specimen containers; analysis containers such as ultraviolet test cells; sterile containers for medical instruments such as scalpels, forceps, gauze and contact lenses; medical instruments such as disposable syringes and prefilled syringes; laboratory instruments such as beakers, vials, ampoules and test tube flasks; and artificial organ housings.

The biochip is one in which biomolecules such as DNA, protein, or sugar chain are immobilized thereon, and

examples thereof include a DNA analysis chip, and a protein analysis chip, and as a test or diagnostic tool using the same. In a broad sense, biosensors are also included.

The medical instrument according to present embodiment has good transparency. Transparency is assessed by internal haze.

Further, it is preferable that the light transmittance is good. The light transmittance is defined by the spectral light transmittance or the total light transmittance depending on the application.

When assumed to be used for all light beams or a plurality of wavelength ranges, it is necessary to have a good total light transmittance, and the total light transmittance in a state where the antireflection film is not provided on the surface is 85% or more, preferably 88 to 93%. When the total light transmittance is 85% or more, a necessary amount of light can be secured. Although a known method can be applied to the total light transmittance measurement method and the measuring apparatus or the like is not limited, examples thereof include a method of molding the cyclic olefin copolymer composition according to the present embodiment into a sheet having a thickness of 3 mm and measuring the total light transmittance of the sheet obtained by molding the cyclic olefin copolymer composition according to the present embodiment using a haze meter according to ASTM D1003.

Further, the medical instrument according to the present embodiment has excellent light transmittance of light having a wavelength of 450 nm to 800 nm.

By providing a known antireflection film on the surface, the light transmittance can be further improved.

Although the embodiments of the present invention have been described above, these are examples of the present invention, and various configurations other than the above can be adopted.

Further, the present invention is not limited to the above-described embodiment, and modifications, improvements, and the like within the range in which the object of the present invention can be achieved are included in the present invention.

## EXAMPLES

Hereinafter, the present invention will be described in more detail with reference to Examples, but the present invention is not limited thereto.

### <Production of cyclic olefin copolymer>

First, a precursor polymer of a cyclic olefin copolymer was obtained by the following method.

### [Production Example 1]

Into a fully nitrogen-purged 500ml glass reactor, 17.3 ml of tetracyclododecene (tetracyclo[6.2.1.1(3,6).0(2,7)]dodeca-4-ene, see the formula (1) below, hereinafter also referred to as TD), 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD.

### [Production Example 2]

Into a fully nitrogen-purged 500ml glass reactor, 17.0 ml of tetracyclododecene, 0.4 ml of indene norbornene (1,4,4a,9a-tetrahydro-1,4-methanofluorene, see the formula (2) below, hereinafter also referred to as IndNB), 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD-IndNB2.

### [Production Example 3]

Into a fully nitrogen-purged 500ml glass reactor, 16.9 ml of tetracyclododecene, 0.9 ml of indene norbornene, 140 ml of dehydrated toluene, and 0.11 ml of hexadiene were added, and heated to 50°C, and stirred. As a catalyst, 5.9

mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD-IndNB5.

[Production Example 4]

Into a fully nitrogen-purged 500ml glass reactor, 15.6 ml of tetracyclododecene, 1.9 ml of indene norbornene, 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD-IndNB10.

[Production Example 5]

Into a fully nitrogen-purged 500ml glass reactor, 1618.8 ml of indene norbornene, 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD-IndNB.

[Production Example 6]

Into a fully nitrogen-purged 500ml glass reactor, 17.0 ml of tetracyclododecene, 0.3 ml of benzonorbornadiene (see the formula (3) below, hereinafter also referred to as BNBD), 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD-BNBD2.

[Production Example 7]

Into a fully nitrogen-purged 500ml glass reactor, 8.7 ml of tetracyclododecene, 6.7 ml of benzonorbornadiene, 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD-BNBD50.

[Production Example 8]

Into a fully nitrogen-purged 500ml glass reactor, 16 ml of benzonorbornadiene, 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RBNBD.

[Production Example 9]

Into a fully nitrogen-purged 500ml glass reactor, 8.7 ml of tetracyclododecene, 8.0 ml of methylphenyl norbornene (see the formula (4) below, hereinafter also referred to as MePhNB), 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RTD-MPNB50.

[Production Example 10]

Into a fully nitrogen-purged 500ml glass reactor, 16 ml of methylphenyl norbornene (see the formula (4) below, hereinafter also referred to as MePhNB), 140 ml of dehydrated toluene, and 0.11 ml of hexadiene were added, and heated to 50°C, and stirred. As a catalyst, 5.9 mg of Grubbs Catalyst™ 2nd Generation was added and reacted with stirring. After 10 minutes, 1 ml of butyraldehyde was added dropwise to terminate the reaction.

About 150 ml of the solution obtained after the reaction was added dropwise to 1400 ml of acetone for crystallization, filtered through Kiriyama filter paper (5B), and dried under reduced pressure at 80°C to obtain 13 g of the polymer. Hereinafter, this polymer is referred to as RMPNB.

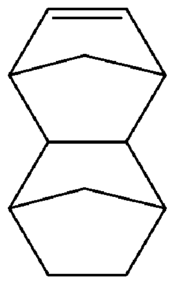

(1)

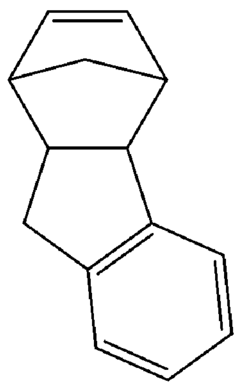

(2)

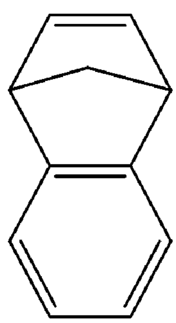

(3)

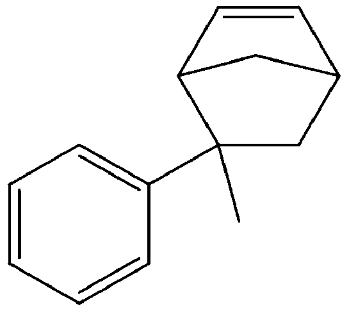

(4)

The precursor polymers shown in Table 1 were obtained by the above method. Subsequently, the obtained precursor polymers were partially or fully hydrogenated by the following method.

(Example 1)

[Production of cyclic olefin polymer P-1 (partial hydrogenation)]

Into a fully nitrogen-purged 1L glass reactor, 13 g of RTD-IndNB2 and 600 ml of o-xylene were added, dissolved, heated to 140°C with stirring, and refluxed. Then, 30.5 g of p-toluenesulfonyl hydrazide and 23.4 g of tri-n-propylamine were added to initiate the reaction. After 4 hours from the initiation of the reaction, the temperature was lowered to room temperature to terminate the reaction, and about 600 ml of the reaction solution was obtained. Similar to the above-described production example, the reaction solution was added dropwise to 1800 ml of acetone for crystallization, filtered through Kiriyama filter paper (5B), and dried under reduced pressure at 80°C to obtain 13 g of the polymer.

When this polymer was observed by NMR, the aromatic rings remained, but other double bonds were almost eliminated.

(Examples 2 to 9)

[Production of cyclic olefin polymers P-2 to 9]

Partial hydrogenation step was carried out in the same manner as in the production of the cyclic olefin polymer P-1 except that the polymers shown in Table 1 were used instead of RTD-IndNB2 to obtain cyclic olefin polymers P-2 to 9. When each of the cyclic olefin polymers P-2 to P-9 was observed by NMR in the same manner as in the case of the cyclic olefin polymer P-1, the aromatic rings remained, but other double bonds were almost eliminated.

(Comparative Example 1)

[Production of cyclic olefin polymer P-10 (full hydrogenation)]

Into a fully nitrogen-purged autoclave, 13 g of RTD, 277 g of cyclohexane, 0.08 g of bis(tricyclohexylphosphine)benzylidine ruthenium (IV) dichloride, and 4.7 g of ethyl vinyl ether were added, and the reaction was carried out by applying 8 atm of hydrogen pressure and raising the temperature to 120°C for 10 hours.

Similar to the above-described production example, the reaction solution was added dropwise to 1800 ml of acetone for crystallization, filtered through Kiriyama filter paper (5B), and dried under reduced pressure at 80°C to obtain 13 g of the polymer.

When this polymer was observed by NMR, aromatic rings and other double bonds were almost eliminated.

(Comparative Examples 2 to 5)

[Production of cyclic olefin polymers P-11 to 14]

Hydrogenation step was carried out in the same manner as in the production of the cyclic olefin polymer P-8 except that the polymers shown in Table 1 were used instead of RTD to obtain cyclic olefin polymers P-11 to 14. When each of the cyclic olefin polymers P-11 to 14 was observed by NMR in the same manner as the cyclic olefin polymers P-8, aromatic ring and other double bonds were almost eliminated.

(Evaluation of cyclic olefin polymer)

[Intrinsic viscosity]

The intrinsic viscosity ([η]) was measured in decalin at 135°C.

Specifically, a resin (about 20 mg) was dissolved in a decalin solvent (15 ml), and the specific viscosity $\eta_{sp}$ was measured in an oil bath at 135°C. The decalin solution was diluted by adding 5 ml of decalin solvent, and then the specific viscosity $\eta_{sp}$ was measured in the same manner as described above. This dilution operation was further repeated twice, and the value of $\eta_{sp}/C$ when the sample concentration (C) was extrapolated to 0 was defined as the intrinsic viscosity [η].

$$\text{Intrinsic viscosity } [\eta] = \lim (\eta_{sp}/C)\ (C \rightarrow 0)$$

[Glass transition temperature Tg (°C)]

The DSC measurement was performed under the following conditions.

- Equipment: DSC7000 manufactured by SII Nanotechnology Co., Ltd.
- Measurement condition: in a nitrogen atmosphere, the temperature was raised from room temperature to 260°C at a heating rate of 10°C/min, and then held for 5 minutes. Then, the temperature was lowered to 30°C at a cooling rate of 10°C/min and then held for 5 minutes . Then, a DSC curve in the process of raising the temperature to 260°C at a heating rate of 10°C/min was obtained.

In the obtained DSC curve, the glass transition temperature was defined as the temperature at the point where a straight line equidistant from the extended straight line of each baseline in the vertical axis direction intersects with the curve of the stepwise change portion of the glass transition.

[$^1$H-NMR measurement]

$^1$H-NMR measurement of the cyclic olefin polymer was carried out by the following method, and the presence or absence of an aromatic ring and the presence or absence of a double bond were confirmed.

$^1$H-NMR manufactured by JEOL Ltd. was used to perform measurement at 0.5ppm to 8ppm, and the presence or absence of aromatic ring-derived hydrogen peaks (6.7 to 7.3ppm) and the presence or absence of other double bond-derived peaks.

In addition, the content of the structural unit (A) in the cyclic olefin copolymer and the content of the aromatic ring in the cyclic olefin copolymer when the total content of the structural unit (A) and the structural unit (B) was 100 mol% were calculated by the following method.

The amount of hydrogens of the aromatic ring contained in the polymer was calculated by calculating the peak area of the peak of the hydrogens derived from the aromatic ring (6.7 to 7.3ppm) relative to the total area of all the peaks derived from hydrogens detected in 0.5ppm to 8ppm by $^1$H-NMR manufactured by JEOL Ltd.

(Evaluation of molded body)

[Pelletization]

The cyclic olefin polymers P-1 to P-14 was granulated using a twin-screw extruder BT-30 (screw diameter 30mm φ, L/D = 46) manufactured by Research Laboratory of Plastics Technology Co., Ltd under the conditions of a setting temperature of 270°C, a resin-extrusion amount of 80 g/min, and a screw rotation speed of 200 rpm to obtain various measurement pellets.

[Injection molding]

The pellets obtained above were injection-molded using an injection molding machine IS-55 manufactured by Toshiba Machine Co., Ltd. under the conditions of a cylinder temperature = 270 to 290°C, an injection speed of 70 to 90%, a screw rotation speed of 70 to 100 rpm, and a mold temperature of 120°C, to prepare injection square plates having a thickness of 2 mm.

[Transparency]

The internal haze of the obtained square plate test piece having a thickness of 2 mm was measured, and the transparency was evaluated according to the following criteria.

The internal haze was measured in benzyl alcohol using a haze meter (NDH-20D manufactured by Nippon Denshoku Industries Co., Ltd.) .

○: Internal haze is less than 6.0%
X: The test piece is visually cloudy, or the internal haze is 6.0% or more.

[Radical generation amount]

Each of the obtained samples (2 mm thick square plate test piece) was irradiated with 20 kilogray of gamma rays, and the amount of radicals generated was measured.

The amount of radicals was measured by an electron spin resonance (ESR) method.

Specifically, about 6 mg of a test piece immediately after gamma ray irradiation was cut out, placed in a test tube (details below), and the ESR spectrum was measured under the following conditions.

- Equipment: electron spin resonance equipment JES-TE200 manufactured by JEOL Ltd.
- Resonance frequency: 9.2 GHz
- Microwave input: 1mW
- Central magnetic field: 326.5 mT
- Sweep width: ± 15mT
- Modulation frequency: 100 kHz
- Sweep time: 8 min.
- Time constant: 0.1 sec
- Amplification: 25
- Sample tube: X-band compatible sample tube with quartz tip
- External aiming: $Mn^{2+}$ standard sample supported on magnesium oxide
- External standard memory: 0, 700
- Measurement temperature: room temperature
- Measurement atmosphere: air

For the relative comparison of the radical generation amount, the normalized value shown in the following equation was used.

$$\text{radical generation amount (normalized value)} = \frac{\text{area of portion of spectrum corresponding to organic radical}}{\text{((area of portion of spectrum corresponding to } Mn^{2+} \text{ (second signal)) x amount of pellets)}}$$

The baseline of the ESR spectrum was corrected based on $Mn^{2+}$ (second signal).

Usually, in the relative comparison of radical amounts, $Mn^{2+}$ (third signal) is used for the area of the reference $Mn^{2+}$ derived signal. However, since the spectrum of the radical derived from the organic radical and $Mn^{2+}$ (third signal) overlap, $Mn^{2+}$ (second signal) was used for all the measurements this time (external standard memory = 700) .

Further, when the organic radical-derived signal overlapped with $Mn^{2+}$ (third signal), calculation was performed using the ESR spectrum of external standard memory = 0.

[Table 1]

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|
| Comonomer | | TD | TD | TD | none | TD | TD | none | TD | none | TD | TD | none | none | none |
| Aromatic ring-containing monomer | | IndNB | IndNB | IndNB | IndNB | BNBD | BNBD | BNBD | MePhNB | MePhNB | none | IndNB | IndNB | BNBD | MePhNB |
| Structural unit derived from aromatic ring-containing monomer | mol% | 2 | 5 | 10 | 100 | 2 | 50 | 100 | 50 | 100 | 0 | 20 | 100 | 100 | 100 |
| Precursor polymer | sample | RTD-IndNB2 | RTD-IndNB5 | RTD-IndNB10 | RIndNB | RTD-BNBD2 | RTD-BNBD50 | RBNBD | RTD-MPNB50 | RMPNB | RTD | RTD-IndNB20 | RIndNB | RBNBD | RMPNB |
| Full hydrogenation/ Partial hydrogenation (hydrogenation of mair chain only) | | partial hydrogenation | partial hydrogenation | partial hydrogenation | partial hydrogenation | partial hydrogenation | partial hydrogenation | partial hydrogenation | partial hydrogenation | partial hydrogenation | full hydrogenation | full hydrogenation | full hydrogenation | full hydrogenation | full hydrogenation |
| cyclic olefin copolymer | sample | P-1 | P-2 | P-3 | P-4 | P-5 | P-6 | P-7 | P-8 | P-9 | P-10 | P-11 | P-12 | P-13 | P-14 |
| η | dl/g | 0.46 | 0.46 | 0.51 | 0.46 | 0.48 | 0.45 | 0.50 | 0.47 | 0.51 | 0.44 | 0.46 | 0.45 | 0.47 | 0.5 |
| Tg | °C | 174 | 173 | 173 | 162 | 172 | 161 | 155 | 117 | 85 | 174 | 168 | 156 | 149 | 78 |
| Aromatic ring content | mol% | 0.4 | 1.0 | 2.0 | 22.2 | 0.8 | 23.5 | 57.1 | 26.3 | 55.6 | 0.0 | 0.0 | 0.0 | 0.0 | 0.0 |
| Transparency | - | ○ | ○ | ○ | ○ | ○ | ○ | ○ | ○ | ○ | ○ | ○ | ○ | ○ | ○ |
| Radical amount | - | 0.5 | 0.3 | 0.3 | 0.5 | 0.5 | 0.3 | 0.3 | 0.3 | 0.2 | 70 | 60 | 60 | 60 | 50 |

This application claims priority on the basis of Japanese application Japanese Patent Application No. 2018-245453 filed on December 27, 2018, the entire disclosure of which is incorporated herein by reference.

## Claims

1. A cyclic olefin copolymer for a medical instrument having an aromatic ring, comprising: at least one structural unit (A) of the following (Ia), (II), and (III):

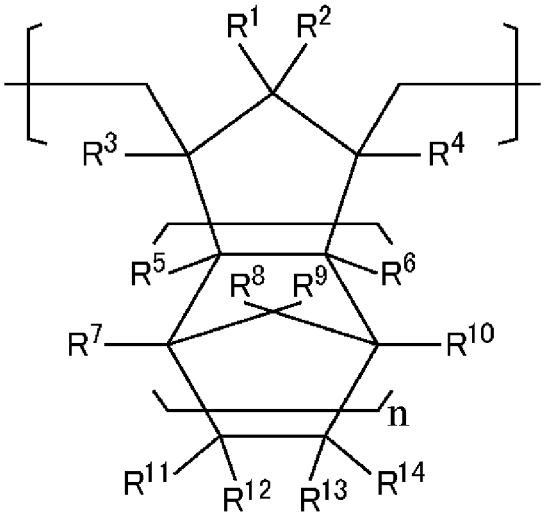

(Ia)

in the formula (Ia), n is 0, 1 or 2; $R^1$ to $R^{14}$ are each independently a hydrogen atom, a halogen atom other than a fluorine atom, or a hydrocarbon group having 1 to 20 carbon atoms which may be substituted with a halogen atom other than a fluorine atom; at least one of $R^{11}$ to $R^{14}$ is a bond; and either (Ib) or (Ic) is independently bonded to one or a plurality of bonding species;

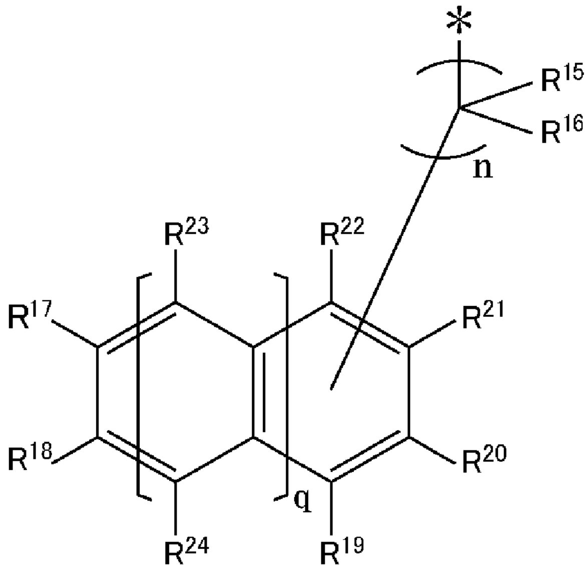

(Ib)

in the formula (Ib), n is 0 to 20; q is 0, 1 or 2; $R^{15}$ to $R^{24}$ are each independently a hydrogen atom, a halogen atom other than a fluorine atom, or a hydrocarbon group having 1 to 20 carbon atoms which may be substituted with a halogen atom other than a fluorine atom; one of $R^{17}$ to $R^{24}$ is a bond, wherein when q = 0, $R^{17}$ and $R^{18}$, $R^{18}$ and $R^{19}$, $R^{19}$ and $R^{20}$, $R^{20}$ and $R^{21}$, $R^{21}$ and $R^{22}$, and $R^{22}$ and $R^{17}$ may be bonded to each other to form a monocyclic ring or a polycyclic ring and when q = 1 or 2, $R^{17}$ and $R^{18}$, $R^{18}$ and $R^{24}$, $R^{24}$ and $R^{24}$, $R^{24}$ and $R^{19}$, $R^{19}$ and $R^{20}$, $R^{20}$ and $R^{21}$, $R^{21}$ and $R^{22}$, $R^{22}$ and $R^{23}$, $R^{23}$ and $R^{23}$, and $R^{23}$ and $R^{17}$ may be bonded to each other to form a

monocyclic ring or a polycyclic ring, and the monocyclic ring or the polycyclic ring may have a double bond, where the monocyclic ring or the polycyclic ring may be an aromatic ring;

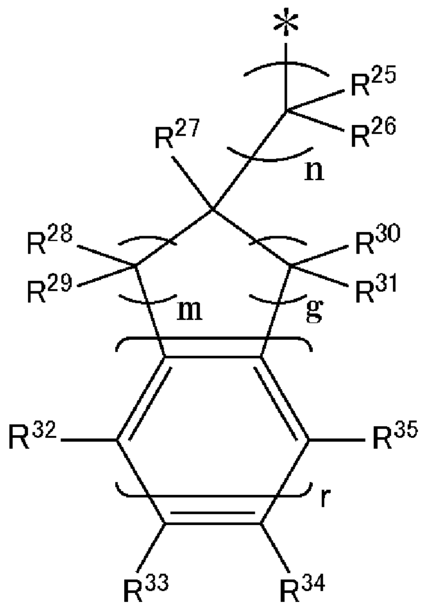

(Ic)

in the formula (Ic), n is 0 to 20; m and g are each independently 0 to 10; r is 1, 2 or 3; and $R^{25}$ to $R^{35}$ are each independently a hydrogen atom, a halogen atom other than a fluorine atom, or a hydrocarbon group having 1 to 20 carbon atoms which may be substituted with a halogen atom other than a fluorine atom, wherein when r = 1, $R^{32}$ and $R^{33}$, $R^{33}$ and $R^{34}$, and $R^{34}$ and $R^{35}$ may be bonded to each other to form a monocyclic ring or a polycyclic ring and when r = 2 or 3, $R^{32}$ and $R^{32}$, $R^{32}$ and $R^{33}$, $R^{33}$ and $R^{34}$, $R^{34}$ and $R^{35}$, and $R^{35}$ and $R^{35}$ may be bonded to each other to form a monocyclic ring or a polycyclic ring, and the monocyclic ring or the polycyclic ring may have a double bond, where the monocyclic ring or the polycyclic ring may be an aromatic ring;

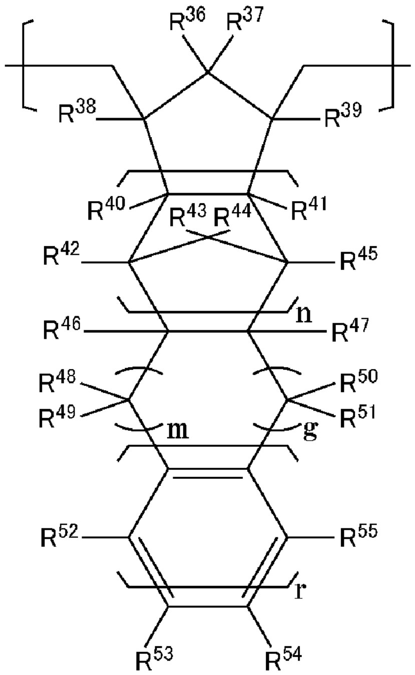

(II)

in the formula (II), n, m, and g are each independently 0, 1 or 2; r is 1, 2 or 3; and $R^{36}$ to $R^{55}$ are each independently a hydrogen atom, a halogen atom other than a fluorine atom, or a hydrocarbon group having 1 to 20 carbon atoms which may be substituted with a halogen atom other than a fluorine atom, wherein when r = 1, $R^{52}$ and $R^{53}$, $R^{53}$

and $R^{54}$, and $R^{54}$ and $R^{55}$ may be bonded to each other to form a monocyclic ring or a polycyclic ring and when r = 2 or 3, $R^{52}$ and $R^{53}$, $R^{53}$ and $R^{54}$, $R^{54}$ and $R^{55}$, and $R^{55}$ and $R^{55}$ may be bonded to each other to form a monocyclic ring or a polycyclic ring, where the monocyclic ring or the polycyclic ring may have a double bond, and the monocyclic ring or the polycyclic ring may be an aromatic ring, and $R^{48}$ and $R^{50}$ may be bonded to each other to form a monocyclic ring or a polycyclic ring, where the monocyclic ring or the polycyclic ring may have a double bond, and the monocyclic ring or the polycyclic ring may be an aromatic ring; and

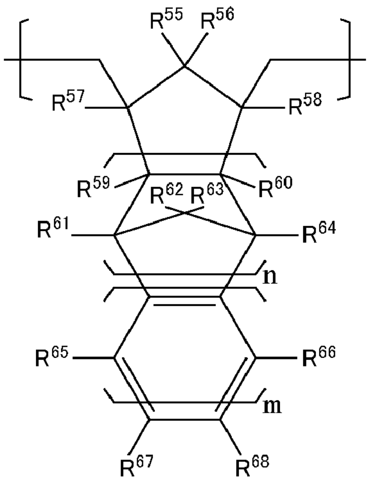

(Ⅲ)

in the formula (III), n is 0, 1 or 2; m is 1, 2 or 3; and $R^{55}$ to $R^{68}$ are each independently a hydrogen atom, a halogen atom other than a fluorine atom, or a hydrocarbon group having 1 to 20 carbon atoms which may be substituted with a halogen atom other than a fluorine atom, wherein when m = 1, $R^{65}$ and $R^{67}$, $R^{67}$ and $R^{68}$, and $R^{68}$ and $R^{66}$ may be bonded to each other to form a monocyclic ring or a polycyclic ring and when m = 2 or 3, $R^{65}$ and $R^{65}$, $R^{65}$ and $R^{67}$, $R^{67}$ and $R^{68}$, $R^{68}$ and $R^{66}$, and $R^{66}$ and $R^{66}$ may be bonded to each other to form a monocyclic ring or a polycyclic ring, where the monocyclic ring or the polycyclic ring may have a double bond, and the monocyclic ring or the polycyclic ring may be an aromatic ring.

**2.** The cyclic olefin copolymer for a medical instrument according to claim 1, wherein a content of the structural unit (A) is 0.2 mol% or more and 100 mol% or less.

**3.** The cyclic olefin copolymer for a medical instrument according to claim 1 or 2, further comprising a structural unit (B) derived from an olefin having 2 to 20 carbon atoms.

**4.** The cyclic olefin copolymer for a medical instrument according to claim 3, wherein the structural unit (B) has an alicyclic structure.

**5.** The cyclic olefin copolymer for a medical instrument according to claim 3 or 4, wherein when a total content of the structural unit (A) and the structural unit (B) is 100 mol%, a content of the structural unit (A) in the cyclic olefin copolymer is 0.5 mol% or more and 100 mol% or less.

**6.** The cyclic olefin copolymer for a medical instrument according to any one of claims 1 to 5, wherein a glass transition temperature (Tg) of the cyclic olefin copolymer is 80°C or higher and 200°C or lower, as measured by a differential scanning calorimeter (DSC).

**7.** The cyclic olefin copolymer for a medical instrument according to any one of claims 1 to 6,
wherein the structural unit (A) is derived from at least one selected from benzonorbornadiene, indene norbornene and methylphenyl norbornene.

**8.** A cyclic olefin copolymer composition for a medical instrument, comprising the cyclic olefin copolymer for a medical instrument according to any one of claims 1 to 7.

**9.** A molded body comprising the cyclic olefin copolymer for a medical instrument according to any one of claims 1 to 7.

**10.** The molded body according to claim 9, which is a syringe or a chemical storage container.

**11.** The molded body according to claim 9, which is a biochip.

## INTERNATIONAL SEARCH REPORT

International application No.
PCT/JP2019/049439

A. CLASSIFICATION OF SUBJECT MATTER
C08G 61/08(2006.01)i
FI: C08G 61/08

According to International Patent Classification (IPC) or to both national classification and IPC

B. FIELDS SEARCHED

Minimum documentation searched (classification system followed by classification symbols)
C08G 61/00-61/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 07-041550 A (NIPPON ZEON CO., LTD.) 10.02.1995 (1995-02-10) claims 1, 7, paragraphs [0011], [0013], [0024], [0036]-[0037], examples | 1-10<br>10-11 |
| X<br>Y | JP 08-217860 A (JAPAN SYNTHETIC RUBBER CO., LTD.) 27.08.1996 (1996-08-27) claim 1, paragraphs [0016]-[0017], [0029]-[0031], [0045], examples | 1-10<br>10-11 |
| X<br>Y | JP 10-139865 A (NIPPON ZEON CO., LTD.) 26.05.1998 (1998-05-26) claims 1, 3, 4, paragraphs [0030]-[0036], [0038], [0043]-[0047], [0053], [0088], examples | 1-10<br>10-11 |
| X<br>Y | JP 2008-214416 A (NIPPON ZEON CO., LTD.) 18.09.2008 (2008-09-18) claims 1, 2, paragraphs [0012], [0022], [0036], examples | 1-10<br>10-11 |

☒ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 February 2020 (05.02.2020) | 18 February 2020 (18.02.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/049439

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2008-179685 A (FUJIFILM CORPORATION) 07.08.2008 (2008-08-07) claims 1, 2, paragraphs [0005], [0016]-[0023], [0025], [0036], [0040], [0047], [0093]-[0096], examples | 1-9<br>10-11 |
| Y | WO 2012/161048 A1 (USHIO INC.) 29.11.2012 (2012-11-29) paragraph [0002] | 11 |
| A | JP 05-310845 A (MITSUI SEKIYU KAGAKU KOGYO KABUSHIKI KAISHA) 22.11.1993 (1993-11-22) claims 1-2, examples | 1-11 |
| P, X<br>P, A | WO 2019/107363 A1 (MITSUI CHEMICALS, INC.) 06.06.2019 (2019-06-06) claims 15, 17, 20, 21, 23, 24, examples | 1-10<br>11 |

Form PCT/ISA/210 (continuation of second sheet) (January 2015)

**INTERNATIONAL SEARCH REPORT**
Information on patent family members

International application No.
PCT/JP2019/049439

| Patent Documents referred in the Report | Publication Date | Patent Family | Publication Date |
|---|---|---|---|
| JP 07-041550 A | 10 Feb. 1995 | US 5681900 A claims 1, 18, column 3, lines 16-53, column 3, line 65 to column 4, line 25, column 6, line 56 to column 7, line 4, column 9, line 30 to column 10, line 5, examples<br>WO 1995/004096 A1<br>EP 0713893 A1<br>DE 69420969 T2 | |
| JP 08-217860 A | 27 Aug. 1996 | (Family: none) | |
| JP 10-139865 A | 26 May 1998 | (Family: none) | |
| JP 2008-214416 A | 18 Sep. 2008 | (Family: none) | |
| JP 2008-179685 A | 07 Aug. 2008 | (Family: none) | |
| WO 2012/161048 A1 | 29 Nov. 2012 | US 2014/087199 A1 paragraphs [0002]-[0004] | |
| JP 05-310845 A | 22 Nov. 1993 | (Family: none) | |
| WO 2019/107363 A1 | 06 Jun. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007137935 A
- WO 2016052302 A
- WO 2017051819 A
- WO 2019065149 A
- JP S60168708 A
- JP S61120816 A
- JP S61115912 A
- JP S61115916 A
- JP S61271308 A
- JP S61272216 A
- JP S62252406 A
- JP S62252407 A
- JP 2007314806 A
- JP 2010241932 A
- WO 2006112434 A
- WO 2008047468 A
- JP 2006321793 A
- JP S63179953 A
- JP H1168643 A
- JP 2018245453 A

### Non-patent literature cited in the description

- **STEPHEN F. HAHN.** An Improvement Method for the Diimide Hydrogenation of Butadiene and Isoprene Containing Polymers. *Journal of Polymer Science Part A: polymer Chemistry,* 1992, vol. 30 (3